Europäisches Patentamt

European Patent Office

Office européen des brevets

(11) Publication number: **0 520 416 A2**

## EUROPEAN PATENT APPLICATION

(21) Application number: **92110655.5**

(22) Date of filing: **24.06.92**

(51) Int. Cl.5: **H01G 4/18**

(30) Priority: **28.06.91 JP 158858/91**

(43) Date of publication of application:
**30.12.92 Bulletin 92/53**

(84) Designated Contracting States:
**DE FR GB IT LU NL**

(71) Applicant: **DIAFOIL HOECHST CO., LTD.**
**3-2, Marunouchi 2-chome, Chiyoda-ku**
**Tokyo(JP)**

(72) Inventor: **Ozaki, Yoshihide**
**2-10-3 Ogawa, Machida-shi**
**Tokyo(JP)**

(74) Representative: **TER MEER - MÜLLER -**
**STEINMEISTER & PARTNER**
**Mauerkircherstrasse 45**
**W-8000 München 80(DE)**

(54) **Film capacitor.**

(57) Disclosed herein is a film capacitor obtained by stacking or winding a laminate comprising:
a plastic film having a vapor-deposited metal layer at least on one surface thereof, and
a coating layer composed of an amorphous polyolefin formed on said vapor-deposition layer.

## BACKGROUND OF THE INVENTION

The present invention relates to a film capacitor.

Recently, along with the miniaturization and advancement of the performance of electronic apparatus, it has been demanded for the miniaturization and advancement of performance in electronic parts, and such miniaturization and performance advancement have been required also for film capacitors.

The miniaturization of the film capacitor has been performed by reducing the thickness of dielectric films in existent film capacitors. But when film capacitors are manufactured while reducing the thickness of the dielectric films, wrinkles are generated on the dielectric films, thereby making it difficult to wind broad width films having many stripes and it is difficult to manufacture miniaturized film capacitors having high performances.

In view of the above, it has been proposed to manufacture a film capacitor by disposing a dielectric coating layer composed of a polycarbonate or polyphenylene oxide on one side or both sides of a metal-deposited dielectric film and winding the thus-obtained film at a broad width and many stripes (Japanese Patent Laid-Open Sho 62-203318).

For further miniaturizing film capacitors, it is necessary to reduce further the thickness of the plastic film and/or dielectric coating layer as the dielectric film.

In the plastic film, it is technically possible to reduce the film thickness to about 0.5 $\mu$m owing to the advance of the film-forming technique, but there are various problems in the production of film capacitors using such plastic films including their handleability in the production steps.

On the other hand, in the reduction of the film thickness of the dielectric coating layer, there are problems, for example, regarding a solvent solubility, a wettability with vapor-deposited metal layer and a drying property of polycarbonate or polyphenylene oxide and it is extremely difficult for the mass production of dielectric coating layers with a uniform thin thickness of less than 1 $\mu$m, in particular, less than 0.5 $\mu$m. Particularly, when the film thickness of the dielectric coating layer is reduced, this brings about a drawback that pinholes occur frequently and a dielectric breakdown voltage per unit thickness lowers.

An offer of a miniature and high performance film capacitor with the film thickness of the dielectric coating layer of not more than 1 $\mu$m has been demanded.

As the result of the present inventors' earnest study for dissolving the foregoing problems, it has been found that by forming a coating layer mainly composed of an amorphous polyolefin on a vapor-deposited metal layer formed on a plastic film, the thus-obtained film capacitor is one wherein the film thickness of the coating layer thereof is not more than 1 $\mu$m and the dielectric breakdown voltage thereof is high. The present invention has been attained on the basis of this finding.

## SUMMARY OF THE INVENTION

In an aspect of the present invention, there is provided a film capacitor prepared by stacking or winding a laminate comprising:

a plastic film having a vapor-deposited metal layer at least on one surface thereof and

a coating layer mainly composed of an amorphous polyolefin formed on the vapor-deposited metal layer.

## DETAILED DESCRIPTION OF THE INVENTION

As the material for the plastic film in the present invention, polyethylene terephthalate, polyethylene naphthalate, poly-1,4-cyclohexanedimethylene terephthalate, polypropylene, polycarbonate and polyphenylene sulfide may be exemplified.

The thickness of the plastic film is from 0.5 to 6 $\mu$m, preferably, from 1 to 5 $\mu$m.

As the vapor-deposited metal in the present invention, aluminum, zinc, nickel, palladium, gold, silver, copper, indium, tin, chromium and titanium may be exemplified.

The metal is vapor-deposited on one side or both sides of a plastic film, for example, by means of vacuum deposition method, electroplating method or sputtering method.

The thickness of the vapor-deposited metal layer is from 10 to 5,000 Å, preferably, from 50 to 3,000 Å.

The amorphous polyolefin used in the present invention has a cyclic structure in the side chain or the main skeleton.

(i) As the amorphous polyolefin having the cyclic structure in the side chain, polyvinyl cyclohexanes prepared by hydrogenating an aromatic ring of a styrenes resin may be exemplified.

2

The polyvinyl cyclohexanes prepared by hydrogenating an aromatic ring of the styrenes resin are prepared by hydrogenating the nuclei of the styrenes resin under the presence of a hydrogenating catalyst having an activity of hydrogenating an aromatic ring. As such a hydrogenating catalyst, metals such as nickel, cobalt, ruthenium, rhodium, platinum and palladium, oxides thereof, salts thereof and complexes thereof, as well as the said metals carried on a carrier such as activated carbon, diatomaceous earth and alumina may be exemplified.

The ring-hydrogenation is carried out, for example, by dissolving a styrenes resin at a concentration of 5 to 50% by weight into a saturated hydrocarbon solvent such as cyclohexane, methylcyclohexane, n-octane, decaline, tetraline and naphtha, and then reacting under a pressure of about 50 to 250 kg/cm$^2$ and at a temperature of 100 to 200°C for 0.5 to 5 hours.

The styrenes resin referred to herein is a styrene homopolymer, a copolymer (random copolymer, block copolymer, graft copolymer) containing not less than 60% by weight of styrene and one or more of unsaturated monomers copolymerizable therewith, for example, styrenes such as chlorostyrene, α-methylstyrene, esters of acrylic acid or methacrylic acid and butadiene, or a blend of such polymers.

The ring-hydrogenation ratio is not less than 70%, preferably not less than 80%.

(ii) As the amorphous polyolefin having the cyclic structure in the main skeleton, a ring-opened polymer of dicyclopentadiene as the monomer and a hydrogenated product thereof, a copolymer of dicyclopentadiene and ethylene and a hydrogenated product thereof, a ring-opened polymer of pentacyclopentadecene as the monomer and a hydrogenated product thereof, a ring-opened copolymer of tetracyclododecenes and norbornenes and a hydrogenated product thereof, an addition polymer of tetracyclododecene or higher polycyclonorbornene monomers and α-olefin and a hydrogenated product thereof, a ring-opened polymer obtained by ring-opening polymerization of pentacyclopentadecadiene and/or pentacyclopentadecene, if necessary, together with other comonomer and a hydrogenated product thereof.

The ring-opened polymer is obtained by ring-opening polymerization of cycloolefins. Further, the hydrogenated product of the ring-opened polymer is obtained by utilizing usual hydrogenating reaction.

As the polymerization catalyst for the ring-opening polymerization process, there can be mentioned a catalyst composed of a metal compound of the platinum group such as ruthenium, rhodium, palladium, osmium, iridium and platinum or a compound of the transition metal such as titanium, vanadium, molybdenum and tungsten and an organic metal compound of the group I-IV of the periodical table. A third ingredient such as a tertiary amine may be combined with the said catalyst as a third ingredient. The polymerization for the ring-opened polymer can be carried out without a solvent but it may be practiced also in an inert organic solvent. As concrete examples of such solvent, there can be mentioned, aromatic hydrocarbons such as benzene, toluene and xylene, aliphatic hydrocarbons such as n-pentane, n-hexane and n-heptane, and halogenated hydrocarbons such as methylene dichloride, dichloroethane, dichloroethylene, tetrachloroethane, chlorobenzene, dichlorobenzene and trichlorobenzene, which may be used as a mixture of two or more of them.

There is no particular restrictions on the conditions for the temperature of the ring-opened polymerization, but a temperature from -20°C to 100°C is preferred. The condition for the polymerization pressure is preferably from 0 to 50 kg/cm$^2$.

The hydrogenating reaction of the ring-opened polymer is connected by a conventional method. As the hydrogenating catalyst, any of catalysts that are usually used upon hydrogenation of olefin compounds can be used and there is no particular restrictions. As the inhomogeneous catalyst thereof, there can be mentioned a solid catalyst composed of nickel, palladium, platinum, or the said metal carried on a carrier such as carbon, silica, diatomaceous earth, alumina and titanium oxide. Further, as the homogeneous catalyst thereof, there can be mentioned materials based on metals belonging to the group VIII of the periodical table, for example, nickel, cobalt or rhodium compounds such as nickel naphthate/triethyl aluminum, cobalt octanate/n-butyl lithium and nickel acetylacetnate/triethyl aluminum. The hydrogenating reaction is conducted in a homogeneous or inhomogeneous system depending on the kind of the catalyst, under a hydrogen pressure of 1 to 150 atm and at a temperature of from 0 to 180°C, preferably 20 to 100°C. The hydrogenation ratio can be controlled optionally by varying, for example, the hydrogen pressure, the reaction temperature, the reaction time and the catalyst concentration. It is preferred that not less than 50% of double bonds in the main skeleton of the polymer are hydrogenated in order that the hydrogenated product exhibit excellent heat-resistance. The hydrogenation ratio is more preferably not less than 80% and, particularly preferably not less than 90%.

The amorphous polyolefin shown in the said (i) and (ii) used in the present invention is soluble to an aromatic solvent such as benzene and toluene or a hydrocarbon solvent such as cyclohexane, and a uniform thin-film can be obtained in the case of using it as the coating material since it has a good wetting

3

property with a vapor-deposited metal layer and a good drying property.

The thickness of the coating layer mainly composed of the amorphous polyolefin in the present invention is from 0.3 to 1 $\mu$m, preferably 0.3 to 0.7 $\mu$m.

The content of the amorphous polyolefin in the coating layer is preferably not less than 80% by weight, more preferably not less than 90% by weight.

The amorphous content in the amorphous polyolefin used in the present invention is preferably not less than 95%, more preferably not less than 98%, and the molecular weight thereof is such that the intrinsic viscosity ($\eta$) as measured in toluene is preferably from 0.1 to 5 dl/g, more preferably 0.2 to 3 dl/g.

The coating layer in the present invention can contain inorganic particles and organic particles. Further, it may contain, for example, a deforming agent, a viscosity improver, a surfactant, a lubricant, dye and a pigment, if necessary.

In the method of disposing a layer mainly composed of an amorphous polyolefin on a vapor-deposited metal layer in the present invention, there can be mentioned, for example, a method of applying a coating solution comprising an amorphous polyolefin dissolved in an aromatic solvent on a vapor-deposited metal layer and then drying the same. As the coating method, there can be mentioned a reverse method, gravure method and air-doctor method.

Specifically, the coating solution is prepared by dissolving an amorphous polyolefin to a concentration of 3 to 30% by weight in an aromatic solvent such as benzene and toluene. The resultant coating solution is coated on the surface of the vapor-deposited metal by means of the above-mentioned method and dried at a temperature of 60 to 120°C for 1 to 15 sec, thereby obtaining a coating layer.

The resultant laminate is stacked or wound to form a capacitor device to which customary methods, for example, a hot pressing, a metallikon, a voltage treatment, an end sealing and a lead attaching, are applied to manufacture a capacitor.

The capacitor according to the present invention is extremely miniature, has a dielectric voltage (withstand voltage) in excess of 95 V and has excellent electric properties.

That is, according to the present invention, the thickness of a dielectric film can be reduced without deteriorating the electric properties, particularly, without lowering of the dielectric voltage, thereby enabling to miniaturize the capacitor, that is, increase the static capacitance per unit volume and the industrial value thereof is remarkable.

EXAMPLE

The present invention will now be described more specifically with reference to examples but the present invention is not restricted only to the following examples.

Characteristics of the capacitor are evaluated as follows.

Measurement for the Withstand Voltage

It was measured in accordance with the method of JIS C 2319.

Namely, a 100 KV DC voltage withstand tester was used, in which electrode terminals of a capacitor device were connected by means of clips to a voltage application electrode and an earthing electrode of the tester respectively, and the voltage of the tester was increased at a rate of 100 V/sec to read off a voltage at which the capacitor was destroyed and short-circuited.

Example 1

Preparation of Amorphous Polyolefin (A)

To a sufficiently dried and nitrogen-substituted reaction vessel, were added 1500 g of pentacyclopentadecene (1,4,5,8-dimethano-1,2,3,4,4a,4b,5,8,8a,9a-decahydro-9H-fluorene) and 6 liter of toluene and, further, 150 mmol of triethyl aluminum and 30 mmol of titanium tetrachloride. The resultant mixture was reacted under stirring at a temperature of 25°C for 4 hours. Then, the resultant reaction material was precipitated by using acetone/isopropanol (1/1), and the filtration product was dissolved again in toluene. To the resultant solution, with acetone/isopropanol (1/1) was added, the precipitated product was filtered and then dried to obtain a reaction product. 300 g of the resultant reaction product was dissolved in 3 liter of cyclohexane and mixed with 30 g of palladium carbon. Subsequently, hydrogen substitution was conducted at a hydrogen pressure of 50 kg/cm$^2$ at a temperature of 10°C 30 min under stirring. Subsequently, the resultant solution was heated to 50°C stirring for 18 hours to obtain a precipitate. The thus-obtained

4

precipitate was dissolved in toluene and, after filtering the solution through a filter, it was re-precipitated in methanol, dried and then purified to obtain an amorphous polyolefin (A) as a hydrogenation product of a pentacyclopentadecene ring-opened product (amorphous content: 100%).

The amorphous polyolefin (A) was dissolved in toluene to obtain a coating solution having 5% by weight (solid concentration).

Manufactured of Capacitor

Aluminum was vapor-deposited on both surfaces of a polyethylene terephthalate film of 5 $\mu$m in thickness and the coating solution described above was coated further thereover using a gravure coater, which was then dried to form a dielectric coating layer having a film thickness of 0.5 $\mu$m. A laminate capacitor was manufactured using the film obtained and a withstand voltage thereof was measured. The dielectric voltage thereof was 110 V.

Example 2

An amorphous polyolefin (B) as a hydrogenation product of a pentacyclopentadecadiene ring-opened polymer was obtained in the same manner as in the production process for the amorphous polyolefin (A) in Example 1 except for adding 1500 g of pentacyclopentadecadiene(4,9,5,8-dimethano-3a,4,4a,5,8,8a,9,9a-octahydro-1H-benzoindene) and 6 liter of toluene.

The resultant amorphous polyolefin (B) was dissolved in toluene/n-heptane (1/1) to prepare a coating solution of 5% by weight (solid concentration), and a laminate capacitor was manufactured in the same manner as in Example 1.

Example 3

640 g of pentacyclopentadecadiene(4,9,5,8-dimethano-3a,4,4a,5,8,8a,9,9a-octahydro-1H-benzoindene) and 960 g of cyclopentadiene were added to 5 liter of toluene, and 1.0 mol% of 1-hexene based on the monomer, 240 mmol of triethyl aluminum, 720 mmol of triethylamine and 48 mmol of titanium tetrachloride were added to the resultant solution successively. The resultant mixture was reacted at a temperature of 25°C for 2 hours. Then, the resultant reaction material precipitated with acetone/isopropanol (1/1), washed and dried to obtain a reaction product. Then, 300 g of the resultant reaction product was dissolved in cyclohexane to form a 10 wt% solution thereof and mixed with 30 g of palladium carbon. The hydrogenating reaction was carried out under the conditions at a hydrogen pressure of 70 kg/cm$^2$ and a temperature of 140°C. The precipitates were washed and dried to obtain an amorphous polyolefin (C) as a hydrogenated product of a ring-opened copolymer composed of pentacyclopentadecadiene and dicyclopentadiene.

The amorphous polyolefin (C) was dissolved in toluene to form a coating solution with 5% by weight (solid concentration) and a laminate capacitor was obtained in the same procedures as those in Example 1.

Comparative Example 1

Polycarbonate was dissolved in dichloromethane to form a coating solution of 5% by weight (solid concentration) and laminate capacitor was obtained in the same procedures as those in Example 1.

Comparative Example 2

Polyphenylene oxide was dissolved in dichloromethane to prepare a coating solution with 5% by weight (solid concentration) and a laminate capacitor was obtained in the same procedures as those in Example 1.

The results thus obtained are shown in the following Table 1.

Table 1

|  | Coating thickness ($\mu$m) | Withstand voltage (V) |
|---|---|---|
| Example 1 | 0.5 | 110 |
| Example 2 | 0.5 | 100 |
| Example 3 | 0.5 | 110 |
| Comp. Example 1 | 0.5 | 45 |
| Comp. Example 2 | 0.5 | 40 |

**Claims**

1. A film capacitor obtained by stacking or winding a laminate comprising:
   a plastic film having a vapor-deposited metal layer at least on one surface thereof, and
   a coating layer composed of an amorphous polyolefin formed on said vapor-deposition layer.

2. A film capacitor according to claim 1, wherein the plastic film is made of polyethylene terephthalate, polyethylene naphthalate, poly-1,4-cyclohexandimethylene terephthalate, polypropylene, polycarbonate or polyphenylene sulfide.

3. A film capacitor according to claim 1, wherein the amorphous polyolefin is a polyolefin having a cyclic structure in the side chain or in the main skeleton.

4. A film capacitor according to claim 3, wherein the polyolefin having the cyclic structure in the side chain is a polyvinyl cyclohexanes.

5. A film capacitor according to claim 4, wherein the polyvinyl cyclohexanes are obtained by ring-hydrogenation of styrenes resin under the presence of a catalyst having an aromatic rings hydrogenating activity.

6. A film capacitor according to claim 3, wherein the polyolefin having the cyclic structure in the main skeleton is a ring-opened polymer of dicyclopentadiene and a hydrogenated product thereof; a dicyclopentadiene-ethylene copolymer and a hydrogenated product thereof; a ring-opened polymer of pentacyclopentadecene and a hydrogenated product thereof; a ring-opened copolymer of tetracyclododecenes and norbornenes and a hydrogenated product thereof; an addition polymer of tetracyclododecenes or higher polycyclonorbornenes monomer and $\alpha$-olefin and a hydrogenated product thereof; a ring-opened polymer of pentacyclopentadecadiene, pentacyclopentadecene or a mixture thereof and other comonomer and a hydrogenated product thereof.

7. A film capacitor according to claim 1, wherein the content of the amorphous polyolefin in the coating layer is not less than 90% by weight.

8. A film capacitor according to claim 1, wherein the molecular weight of the amorphous polyolefin such that the intrinsic viscosity as measured in toluene is from 0.1 to 5 dl/g.

9. A film capacitor according to claim 1, wherein the thickness of the plastic film is from 0.5 to 6 $\mu$m, the thickness of the vapor-deposited metal layer is from 10 to 5000 Å and the thickness of the coating layer is from 0.3 to 1 $\mu$m.